# EUROPEAN PATENT APPLICATION

(11) **EP 2 043 321 A1**
(43) Date of publication of application: **01.04.2009**
(21) Application number: 07291143.1
(22) Date of filing: 26.09.2007
(51) Int. Cl.: H04L 29/06, H04M 3/56, H04L 12/18

(54) **Method of initiating a telecommunication**

(71) Applicant: Alcatel Lucent, 75008 Paris (FR)
(72) Inventor: Rey, Jean-François, 29200 Brest (FR); Litteaut, Jacques, 78160 Marly le Roi (FR); Coulon, Stéphane, 95810 Arronville (FR)
(74) Representative: Zinsinger, Norbert

(57) **Abstract**

The invention concerns a method of initiating a telecommunication (5) between a caller (1) and a callee (2) while the caller (1) is already engaged in a telecommunication (6) with a third party (3), and a terminal and a computer program product to execute this method. The callee (2) is invited to the telecommunication (5) with the caller (1) and caller status information is sent to the callee (2). The caller status information is related to the caller's (1) telecommunication (6) with the third party (3). Data associated with the caller status information are indicated to the callee (2). It is determined if the callee (2) accepts or rejects the invitation after the indication. If the callee (2) accepts the invitation, the telecommunication (5) between the caller (1) and the callee (2) is established.

## Description

The present invention relates to a method of initiating a telecommunication, in particular a telecommunication between a caller and a callee while the caller is already engaged in a telecommunication with a third party, and a terminal and a computer program product to execute said method.

Enterprise communications nowadays mean a large number of communications between users. In order to increase efficiency, users rely on screening or display mechanisms so that they only accept the communications that are really relevant to them.

When a user receives a call, he or she does not know if the calling party is on-line with someone else. Usually when this is the case, the importance of the call is higher, since it means that several people are waiting for the call to be accepted.

Presently, the best existing solution is for the calling party to start a conference and invite the called party to the conference. A conference bridge, i.e., a specialised type of equipment that links telecommunication lines, provides the list of participants of the conference. The called party may see the list of participants of the conference and decide to accept or decline the call,

US 5,263,084 describes an enhanced telephony call waiting feature wherein identifying information related to a third party wishing to converse with a first party already engaged in a conversation with a second party is spontaneously provided to the first party.

US 2002/0077089 A1 describes a similar method of identifying a calling party to a called party at the same time the called party is engaged in communication with a third party. The calling party makes a call to the called party while the first communication is ongoing and a call waiting indication is provided to the calling party. Responsive thereto, an identifying signal is selected by the calling party and sent to the called party to announce that the calling party is waiting. The identifying signal may be a tone, sound, or voice message. The called party may respond to the identifying signal by taking the call, dropping the call, or diverting the calling party to an alternative destination, such as voice mail or some call forwarding destination.

Both prior art documents are dealing with the situation where someone tries to reach a calling party already engaged in a call.

It is the object of the present invention to provide an improved method of initiating a telecommunication between a caller and a callee.

The object of the present invention is achieved by a method of initiating a telecommunication between a caller and a callee while the caller is already engaged in a telecommunication with a third party, whereby the method comprises the steps of inviting the callee to the telecommunication with the caller and sending caller status information to the callee, the caller status information being related to the caller's telecommunication with the third party, indicating data associated with the caller status information to the callee, determining if the callee accepts or rejects the invitation after the indication, and if the callee accepts the invitation, establishing the telecommunication between the caller and the callee. The object of the present invention is further achieved by a caller's terminal for initiating a telecommunication between the caller and a callee while the caller's terminal is already engaged in a telecommunication with a third party, wherein the terminal comprises a control unit adapted to invite the callee to the telecommunication with the caller and send caller status information to the callee for indication of data associated with the caller status information to the callee, the caller status information being related to the caller's telecommunication with the third party, determine if the callee accepts or rejects the invitation after the indication, and if the callee accepts the invitation, trigger an establishment of the telecommunication between the caller and the callee. And the object of the present invention is achieved by a computer program product for initiating a telecommunication between a caller and a callee while the caller is already engaged in a telecommunication with a third party, wherein the computer program product, when executed by a caller's terminal, performs the steps of inviting the callee to the telecommunication with the caller and triggering a sending of caller status information to the callee for indication of data associated with the caller status information to the callee, the caller status information being related to the caller's telecommunication with the third party, determining if the callee accepts or rejects the invitation after the indication, and if the callee accepts the invitation, triggering an establishment of the telecommunication between the caller and the callee.

When the caller wants to establish a real-time communication with the callee while the caller being already in contact with some other participant, the targeted callee is provided with a list of participants, preferably with their status, who are interacting with the caller so to allow the targeted callee to judge about the present situation of the caller before accepting or not the telecommunications with that caller.

The callee's device provides the list of participants and their status (on line, in chat, etc.) when establishing a real-time communication (by chat, by voice, or by voice and video call) so that the callee can see it displayed on his or her device as he or she is alerted.

The proposed invention does without a conference bridge. The terminal - and not a conference bridge - provides the list of participants and their status (on-line, in chat, etc.). This reduces the effort and the costs for a convenient initiation of a telecommunication.

The present invention offers the called party a comfortable and effective solution facilitating a decision whether to accept or deny a call. In addition, the invention offers the possibility that the called party decides whether to accept the call as a consultation call or as conference. Therefore, the called party can shape the type of telecommunication according to his wishes.

Furthermore, the proposed invention works for telephony as well as for instant messages. Thus, it offers an improved solution of initiating a telecommunication within a big sector of telecommunications.

Further advantages are achieved by the embodiments of the invention indicated by the dependent claims.

According to a preferred embodiment of the invention, the caller status information comprises a list of participants participating in the caller's telecommunication with the third party. The list of participants may be represented by a list of telecommunications addresses (E.164 telephone number, extension number, SIP number) or a list of identifiers (shortcuts, internal code), a list of names (personal name, institutional name); (SIP = Session Initiation Protocol). Said list of participants is transmitted from a terminal of the caller to a terminal of the callee and presented on the callee's terminal. The list may be displayed on a screen of the callee's terminal or output by voice (by means of a text-to-speech application).

It is also possible that the call status information comprises telephone numbers of the participants of the telecommunication between the caller and the third party. The call status information is then transmitted to the terminal of the callee. At the terminal of the callee, data associated with the call status information, e.g., names and/or photos of the participants are displayed instead of the call status information itself, i.e., the transmitted telephone numbers. This may be possible by a mapping process involving a participants' data base accessible both by the caller's terminal and the callee's terminal. In the mapping process, the telephone numbers received as call status information by the callee's terminal are mapped to names and photos stored in the participants' data base.

According to another preferred embodiment of the invention, the caller's terminal receives an input from the caller, the input specifying the information to be sent as caller status information to the callee. The caller may pre-define a set of preferences and store the pre-defined preferences in a user profile. The user profile is accessed by the caller's terminal before transmission of the caller status information. The user profile may also be associated with additional information assigned to regular communication partners of the caller. The caller may maintain a personal electronic address book with communication partners of the caller and associated information, such as their telephone numbers, their personal names, their institution (company, office, family), their nicknames, mobile numbers, etc. The user profile then comprises a reference to the address book together with a specification which of the associated information to use as caller status information for the cases that the communication partners are a callee or a third party.

For example, the user profile may specify that if a third party communicating with the caller is external, i.e., not from the caller's company, the caller status information comprises a personal name and an institutional name associated with the third party. In addition, the user profile may specify that if a third party communicating with the caller is internal, i.e., from the caller's company, and the callee is also internal, the caller status information comprises a nickname associated with the third party. However if a third party communicating with the caller is internal, i.e., from the caller's company, and the callee is external, the caller status information comprises a personal name and an institutional name associated with the third party.

It is also possible that the caller is presented a select list showing available information about the third party. The caller then selects manually, before initiating the invitation to the callee, which information is to be transmitted as caller status information to the callee.

According to another preferred embodiment of the invention, the caller and/or the callee have a possibility to determine that the telecommunication between the caller and the callee is established as a one-to-one communication limited to the caller and the callee or as a conference telecommunication comprising both the caller, the callee and the third party. The selection which type of telecommunication, one-to-one or conference, to establish may be done by pressing a pre-defined key on a keyboard. It is also possible that a selection application presents a select list (visual, speech) to the caller and/or the callee. It is possible that if both the caller and the callee determine about the type of the telecommunication and their selection is contradictory, then the confidential type, i.e., the one-to-one telecommunication, is established first, with an option to join the third party later.

Thus, it is possible to adjust the newly established telecommunication between the caller and the callee to the level of confidentiality that is deemed appropriate by the caller or the callee. If the caller and the callee disagree, the safest solution is chosen per default.

The establishment of the one-to-one telecommunication requires that the traffic signals between the caller and the callee are not distributed to the third party. On the other hand, The establishment of the conference telecommunication requires that the traffic signals between the caller and the callee and the traffic signals between the caller and the third party are pooled and distributed to all participants of the conference telecommunication, e.g., using a reproducing process.

In a preferred embodiment, a telecommunication protocol is used for the invitation that provides extra data for display and processing when initiating a telecommunication session. An appropriate telecommunication protocol is SIP.

According to another preferred embodiment of the invention, the caller status information is provided to the callee by adding a resource list to a SIP INVITE message which is sent to the callee. The resource list comprises information about participants involved in the telecommunication between the caller and the third party.

Preferably, a new context element within a SIP framework is defined which is used to indicate which type of telecommunication is established between the caller and the third party. The defined new context element is added to a conference package information which is used to send the caller status information to the callee.

These as well as further features and advantages of the invention will be better appreciated by reading the following detailed description of presently preferred exemplary embodiments taken in conjunction with accompanying drawings of which:
- Fig. 1: is a block diagram of a telecommunication according to an embodiment of the invention.
- Fig. 2: is a message flow diagram according to an embodiment of the invention wherein the callee accepts the invitation.
- Fig. 3a: is a message flow diagram according to a first embodiment of the invention wherein the callee rejects the invitation.
- Fig. 3b: is a message flow diagram according to another embodiment of the invention wherein the callee rejects the invitation.

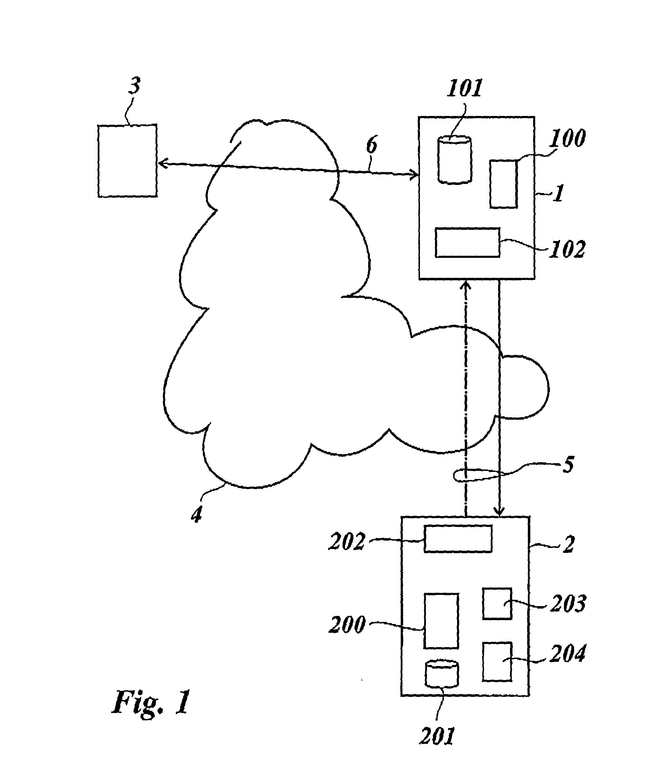

Fig. 1 shows three subscribers 1, 2, 3 of a wireline and/or wireless telecommunications network 4, e.g., a PSTN or an ISDN network or a GSM network (PSTN = Public Switched Telephone Network; ISDN = Integrated Services Digital Network; GSM = Global System for Mobile Communication). It is also possible that the telecommunications network is at least in parts a packet-based network, e.g., the Internet. The three subscribers 1, 2, 3 play the roles of a caller 1 involved in an on-going telecommunication 6 with a third party 3, and a callee 2 which is going to be invited by the caller 2 to a telecommunication 5 with the caller 1.

In the following, when referring to a caller, a callee, and a third party, it is implied that the caller, the callee, and the third party each use terminals to send and receive telecommunication signals without explicitly referring to these terminals. So, the terms "caller/callee/third party " and "terminal associated with/used by a caller/callee/third party" may be used interchangeably. The terminals used by the caller 1, the callee 2 and the third party 3 may be wireline telephone terminal (ISDN terminal) or wireless terminals (DECT telephone set, cellular phone, PDA) (DECT = Digital Enhanced Cordless Telecommunications; PDA = Personal Digital Assistant). It is also possible that the terminals are IP softphones run by a computer application (IP = Internet Protocol).

The terminal of the caller 1 comprises a control unit 100, an interface 102, and a memory 101. The terminal of the callee 2 comprises a control unit 200 (processor, CPU = Central Processing Unit), an interface 202, a memory 201, an input unit 203 (microphone, keypad), and an output unit 204 (loudspeaker, screen).

The control unit 100 of the caller 1 is composed of one or several interlinked computers, i.e., a hardware platform, a software platform basing on the hardware platform and several application programs executed by the system platform formed by the software and hardware platform. The functionalities of the terminal of the caller 1 are provided by the execution of these application programs. The application programs or a selected part of these application programs constitute a computer software product providing a telecommunication set-up service as described in the following, when executed on the system platform. Further, such computer software product is constituted by a storage medium 101 storing these application programs or said selected part of application programs.

The name of the caller 1 may be "Bob", the name of the callee 2 may be "Alice", and the name of the third party 3 may be "Charles". The telecommunication 5 is drawn in Fig. 1 with a solid arrow pointing from Bob 1 to Alice 2 and a dashed arrow pointing from Alice 2 to Bob 1. This is to indicate that Bob 1 sends an invitation (solid arrow) to Alice 2. Alice 2 may or may not accept (dashed arrow) the received invitation. If Alice 2 decides not to accept the invitation, in most SIP transactions the called device (= the terminal of Alice 2) usually sends a response code indicating a timeout.

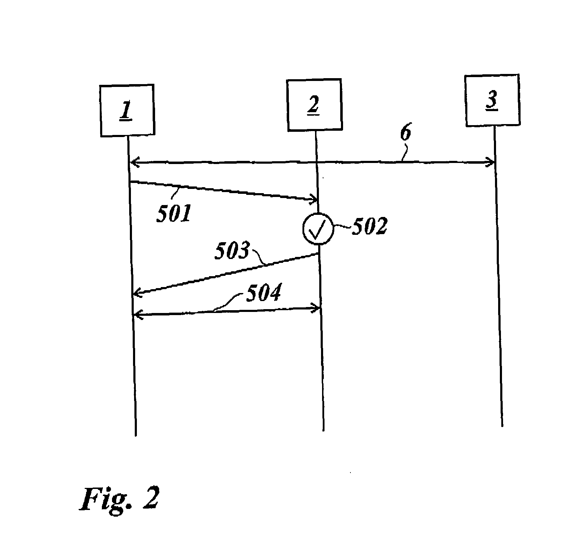

Fig. 2 shows a message flow diagram of messages exchanged in a telecommunications system to perform a first embodiment of the invention. The message flow diagram shown in Fig. 2 involves the caller Bob 1, the callee Alice 2, and the third party 3, as described above with reference to Fig. 1. The following embodiment is based on SIP but other embodiments are possible with other protocols that provide data for display and processing when initiating a session.

Bob 1 holds a telecommunication 6 with Charles 3, At some point of the on-going telecommunication 6 with Charles 3, Bob 1 wants to call Alice 2 while maintaining the telecommunication 6 with Charles 3. Thus, Bob 1 initiates a call to Alice 2: Bob 1 inputs a telecommunication address associated with the terminal of Alice 2, e.g., a SIP address sip:Alice@example.com, on his terminal and presses a call set-up key. Triggered by the activation of the call set-up key, the control unit 100 determines whether Bob 1 is in an on-going telecommunication. If Bob 1 were not engaged in an on-going telecommunication, the control unit 100 would set up a common invitation to Alice 2, e.g., by sending a call to Alice 2. However, since the control unit 100 determines that Bob 1 is engaged in an on-going telecommunication, the control unit 100 sets up a invitation which comprises caller status information.

For example, a SIP INVITE (for a real time call) or a MESSAGE (for an instant messaging) is enhanced with a resource list that indicates the list of participants (cf. G. Camarillo, A. Roach: Framework and Security Considerations for Session Initiation Protocol (SIP) Uniform Resource Identifier (URI)-List Services, IETF, September 2006, http://www.ietf.org/internet-drafts/draft-ietf-sipping-uri-services-06.txt; IETF = Internet Engineering Task Force). In this case, the resource list may comprise the names "Bob" and "Charles".

Preferably, the caller status information also provides information about the type of communication between Bob 1 and Charles 3, e.g., on-line, chat, etc.

Enhanced status about the other parties can be provided by a conference package information that would be enhanced to state that the context is not a conference (cf. J. Rosenberg, H. Schulzrinne, O. Levin, A Session Initiation Protocol (SIP) Event Package for Conference State, Request for Comments (= RFC) 4575, IETF, August 2006, http://www.ietf.org/rfc/rfc4575.txt). A new <context> element within <xs:complexType name="conference-description-type"> in RFC4575 could have "consultation", "redirect" (or more status) in order to define the type of communication that takes place.

The following gives an example of an enhanced SIP INVITE message sent from Bob 1 to Alice 2:

The enhanced SIP INVITE message 501 is sent from Bob 1 to Alice 2. The message 501 is received by Alice's 2 terminal interface 202 and forwarded to the control unit 200 for further processing. The control unit 200 analyses the message 501 and extracts the information that the sender is Bob 1, that Bob 1 is in a communication with Charles 3, and that the communication established between Bob 1 and Charles 3 is a consultation.

The control unit 200 triggers the output unit 204 (e.g., screen) to display the information that Bob 1 is in a consultation with Charles 3. At the same time, the invitation is announced to Alice 2 by the output unit 204 (loudspeaker) replaying a ringing sound.

Alice 2 is alerted by the ringing sound and looks at the screen. Alice 2 sees that Bob 1 is calling and that Bob 1 is in a consultation with Charles 3. Alice 2 decides to accept the invitation and presses the start key 502. Triggered by this action, the control unit 503 generates a 200 OK message 503 which is re-sent to Bob 1. According to the SIP protocol, a session between Bob 1 and Alice 2 is set up.

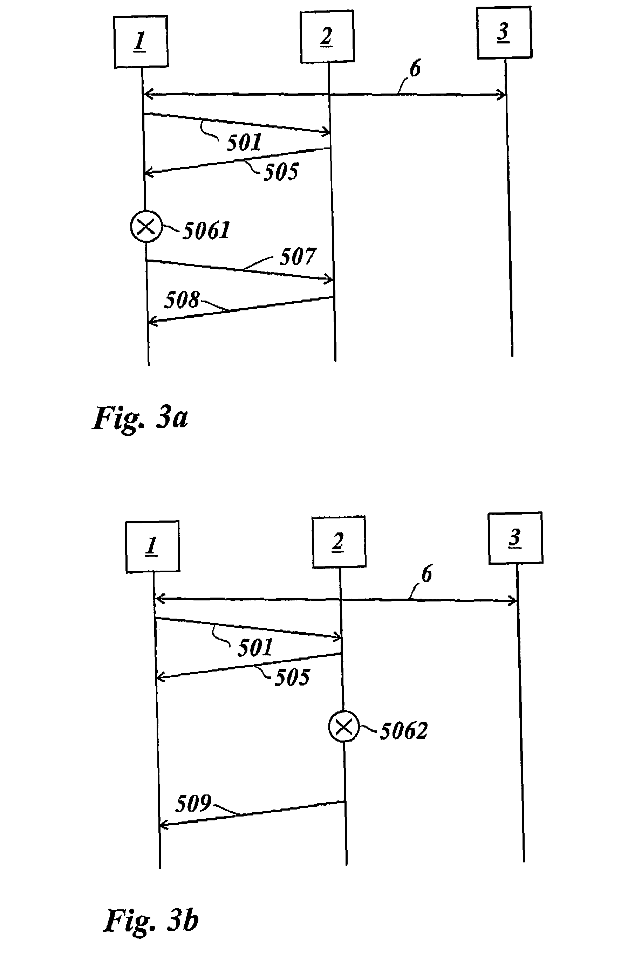

Fig. 3 shows message flow diagrams related to embodiments of the invention where the callee does not accept the caller's invitation. Fig. 3a shows a first embodiment of the invention where the callee does not accept the caller's invitation. The message flow diagram shown in Fig. 3a involves, as the message flow diagram shown in Fig. 2, the caller Bob 1, the callee Alice 2, and the third party 3. The following embodiment is based on SIP but other embodiments are possible with other protocols that provide data for display and processing when initiating a session.

The starting point of the message flow diagram shown in Fig. 3a is the one as aforementioned with regard to Fig. 2, which is referred to.

An enhanced SIP INVITE message 501 (= initiation message) is sent from Bob 1 to Alice 2. The message 501 is received by Alice's 2 terminal interface 202 and forwarded to the control unit 200 for further processing. The control unit 200 analyses the message 501 and extracts the information that the sender is Bob 1, that Bob 1 is in a communication with Charles 3, and that the communication established between Bob 1 and Charles 3 is a consultation.

The control unit 200 triggers the output unit 204 (e.g., a screen) to display the information that Bob 1 is in a consultation with Charles 3. At the same time, the invitation is announced to Alice 2 by the output unit 204 (e.g. a loudspeaker) replaying a ringing sound.

Alice 2 is alerted by the ringing sound and looks at the screen. Synchronously, an alert notification 505 is sent from Alice 2 to Bob 1. Alice 2 sees that Bob 1 is calling and that Bob 1 is in a consultation with Charles 3. Alice 2 decides to reject the invitation. Therefore, Alice 2 does not press the start key. The control unit 100 of Bob's 1 terminal monitors the messages coming in at the interface 101.

The control unit 100 waits for a pre-determined time span for a reply from Alice 2. Since no reply has been received from Alice 2 within the pre-defined time span, the control unit 100 of Bob's 1 terminal reaches a timeout 5061 at the end of the time span. As a result of the timeout 5061, the control unit 100 triggers the transmission of a "cancel" message 507 from Bob 1 to Alice 2. The terminal of Alice 2 acknowledges the receipt of the cancel message 507 by an "initiation aborted" message 508.

Fig. 3b shows another embodiment of the invention where the callee does not accept the caller's invitation. The message flow diagram shown in Fig. 3a involves, as the message flow diagram shown in Fig. 2, the caller Bob 1, the callee Alice 2, and the third party 3. The following embodiment is based on SIP but other embodiments are possible with other protocols that provide data for display and processing when initiating a session.

The starting point of the message flow diagram shown in Fig. 3b is the one as aforementioned with regard to Fig. 2, which is referred to. The steps 501 and 505 are the same as aforementioned with regard to Fig. 3a.

Alice 2 decides to reject the invitation. Therefore, Alice 2 does not press the start key. Alice's 2 terminal monitors the input of Alice 2. Alice's 2 terminal waits for a pre-determined time span for an action by Alice 2. Since no input has been received from Alice 2 within the pre-defined time span, Alice's 2 terminal reaches a timeout 5062 at the end of the time span. As a result of the timeout 5062, the terminal of Alice 2 triggers the transmission of a "no response" message 509 from Alice 2 to Bob 1. Accordingly, the set-up of a telecommunication between Bob 1 and Alice 2 is aborted.

## Claims

1. A method of initiating a telecommunication (5) between a caller (1) and a callee (2) while the caller (1) is already engaged in a telecommunication (6) with a third party (3),
**characterised in**
**that** the method comprises the steps of:
inviting (501) the callee (2) to the telecommunication (5) with the caller (1) and sending caller status information to the callee (2), the caller status information being related to the caller's (1) telecommunication (6) with the third party (3);
indicating data associated with the caller status information to the callee (2);
determining if the callee (2) accepts or rejects the invitation (501) after the indication; and
if the callee (2) accepts the invitation (501), establishing the telecommunication (5) between the caller (1) and the callee (2).

2. The method of claim 1,
**characterised in**
**that** the method comprises the further steps of:
transmitting, as the caller status information, a list of participants participating in the caller's telecommunication (6) with the third party (3); and
presenting said list of participants on a terminal of the callee (2).

3. The method of claim 1,
**characterised in**
**that** the method comprises the further step of:
receiving an input from the caller (1), the input specifying the information to be sent as caller status information to the callee (2).

4. The method of claim 1,
**characterised in**
**that** the method comprises the further step of:
establishing a one-to-one telecommunication (5) between the caller (1) and the callee (2) by blocking a transmission of data associated with the one-to-one telecommunication established between the caller (1) and
the callee (2) to the third party (3).

5. The method of claim 1,
**characterised in**
**that** the method comprises the further step of;
joining the telecommunication (5) established between the caller (1) and
the callee (2) and the telecommunication (6) between the caller (1) and
the third party (3) in a conference call.

6. The method of claim 1,
**characterised in**
**that** the method comprises the further step of:
utilising a telecommunication protocol providing data for display and
processing when initiating a telecommunication session.

7. The method of claim 1,
**characterised in**
**that** the method comprises the further step of:
sending caller status information by enhancing a SIP INVITE message with a resource list indicating participants involved in the telecommunication (6) between the caller (1) and the third party (3).

8. The method of claim 1,
**characterised in**
**that** the method comprises the further steps of:
defining a new context element within a SIP framework for specification of a type of the telecommunication (6) between the caller (1) and the third party (3); and
using a conference package information enhanced by the defined new context element to send caller status information to the callee (2).

9. A caller's (1) terminal for initiating a telecommunication (5) between the caller (1) and a callee (2) while the caller's (1) terminal is already engaged in a telecommunication (6) with a third party (3),
**characterised in**
**that** the terminal comprises a control unit (100) adapted to invite (501) the callee (2) to the telecommunication (5) with the caller (1) and send caller status information to the callee (2) for indication of data associated with the caller status information to the callee (2), the caller status information being related to the caller's (1) telecommunication (6) with the third party (3), determine if the callee (2) accepts or rejects the invitation (501) after the indication, and if the callee (2) accepts the invitation (501), trigger an establishment of the telecommunication (5) between the caller (1) and the callee (2).

10. A computer program product for initiating a telecommunication (5) between a caller (1) and a callee (2) while the caller (1) is already engaged in a telecommunication (6) with a third party (3),
**characterised in**
**that** the computer program product, when executed by a caller's (1) terminal, performs the steps of:
inviting (501) the callee (2) to the telecommunication (5) with the caller (1) and triggering a sending of caller status information to the callee (2) for indication of data associated with the caller status information to the callee (2), the caller status information being related to the caller's (1) telecommunication (6) with the third party (3);
determining if the callee (2) accepts or rejects the invitation (501) after the indication; and
if the callee (2) accepts the invitation (501), triggering an establishment of the telecommunication (5) between the caller (1) and the callee (2).
